# EUROPEAN PATENT APPLICATION

(11) **EP 2 273 604 A1**
(43) Date of publication of application: **12.01.2011**
(21) Application number: 09742642.3
(22) Date of filing: 12.03.2009
(51) Int. Cl.: H01M 14/00, H01L 31/04, H01M 2/08

(54) **DYE-SENSITIZED SOLAR CELL**

(30) Priority: 08.05.2008 JP 2008122445
(71) Applicant: NOK Corporation, Minato-ku Tokyo 105-8585 (JP)
(72) Inventor: UDA, Toru, Fujisawa-shi Kanagawa 251-0042 (JP)
(74) Representative: TBK-Patent
(86) International application number: PCT/JP2009/054751
(87) International publication number: WO 2009/136517

(57) **Abstract**

Provided is a dye-sensitized solar cell having a sealing means which is not impaired by electrolyte or sunlight because a gasket can be fixed to a photoelectrode or a counter electrode without using an adhesive so that long term reliability of the sealed state is ensured, wherein the dye-sensitized solar cell has a sealing means for sealing an electrolyte layer between a photoelectrode and a counter electrode, and the sealing means is a lip-shaped gasket made of an elastic material, sandwiched between the photoelectrode and the counter electrode, and fixed by a retaining means formed in the photoelectrode or the counter electrode so as to seal the electrolyte layer.

## Description

### BACKGROUND OF THE INVENTION

### Field of the Invention

The present invention relates to a dye-sensitized solar cell which is excellent in a durability.

### Description of the Conventional Art

In recent years, there is fear of a deterioration of a global environment such as a global warming or the like, and a solar photovoltaic power generation is paid attention as clean energy.

However, its spread has not been yet in a satisfactory state.

Further, one of the greatest causes putting obstacles in the way of the spread is a high manufacturing cost of a silicone type solar cell which is a mainstream at the present.

A great factor that the manufacturing cost does not come down exists in a point that there is a limit on its manufacturing method in inexpensively supplying a large amount of silicone semiconductor which is necessary for the silicone type solar cell, and a great improvement in future may not be hopeful.

In contrast to the silicone type solar cell, a dye-sensitized solar cell announced by a group of Grezwel et al. is a wet type solar cell having a light transforming layer sensitized by a spectral sensitization dye as a working electrode.

A basic structure of the wet type solar cell is constructed by a transparent conductive electrode provided on a transparent substrate such as a glass or the like, an electrolyte, a spectral sensitization dye, a porous semiconductor layer such as a titanium oxide or the like, and a counter electrode provided on a substrate.

In this kind of dye-sensitized solar cell, since a used material is inexpensive, and a large-scale equipment such as a vacuum process or the like which is necessary for the silicone type solar cell is not required, this solar cell is widely expected as a low-cost solar cell.

However, a reliability of the dye-sensitized solar cell which has been developed up to the present is lower in comparison with that of the silicone type.

One of its causes is a problem about a sealing of the electrolyte which is a carrier of electron.

If the electrolyte leaks, or water or the like makes an intrusion into the electrolyte from an external portion, not only a power generation efficiency is lowered, but also a deterioration of the light transforming layer is caused, thereby giving rise to a problem that a service life of the dye-sensitized solar cell is shortened.

There are electrolytes in liquid, gel and solid modes.

The gel and the solid, which may less leak, are suitable for sealing of an electrolyte solution (patent document 1).

However, in order to obtain a high conversion efficiency corresponding to that of the silicone type, a liquid, particularly an organic solvent having a high polarity and a high volatility such as acetonitrile or the like is preferable.

In this case, it is hard to seal such the electrolyte solution in a cell of the solar cell.

Accordingly, in order to improve a long-term reliability of the dye-sensitized solar cell, it is essential to seal the electrolyte solution existing between the substrates of the transparent conductive electrode and the counter electrode at a periphery of end portions of the substrates by using a sealing material so as to prevent the electrolyte solution from leaking and prevent water from making an intrusion.

As sealing methods which have been studied up to now, there are adhesion methods which use a liquid adhesive agent (patent document 2), a hot melt film (patent document 3), a glass frit (patent document 4) and the like.

Further, while there are the liquid adhesive agents of a silicone resin, an epoxy resin, an acryl resin and the like, all the adhesive agents have certain degrees of polarity for enhancing an adhesive property to an adhered material such as the substrate or the like.

Accordingly, an affinity with the electrolyte solution becomes higher on the basis of this polarity, and a sealing performance is lowered in the long term due to erosion and swelling.

On the other hand, a polyisobutylene resin is reported as an adhesive agent having a low polarity.

Accordingly, erosion and swelling by the electrolyte solution can be suppressed to some extent, however, since an adhesive property is inferior, there is a risk that the sealing performance is lowered by peeling or the like in the long term.

Further, as a hot melt film, there is a thermoplastic resin having a carboxylic acid radical in a molecular chain, specifically HIMILAN (manufactured by DU PONT-MITSUI POLYCHEMICALS CO., LTD) (patent document 5).

In this case, since it has a polarity similarly to the liquid adhesive agent, there is a risk that a sealing performance is lowered in the long term.

On the other hand, since the sealing by the glass frit is excellent in the sealing performance, however, generally requires a heat treatment at 450 or higher, there is a risk that constructing parts including the sensitizing dye are changed in quality.

Further, a work operation is complicated, and a deterioration of a manufacturing cost is caused.

On the other hand, a solidification temperature can be made to 60 or lower by using a silicate such as a water glass or the like.

However, there is a risk that water, sodium and the like included in the water glass dissolve into the electrolyte so as to lower the conversion efficiency (patent document 7).

Further, since a cell temperature in the solar cell rises on the basis of an irradiation of a solar light, there is a risk that the adhered portion is peeled or the substrate is broken by swelling and contraction caused by a temperature change in the case that linear expansion coefficients are different between the sealing material and the substrate, in any of the adhesion method.

In regard to the sealing problems of the adhesion methods as mentioned above, there has been proposed a non-adhesion method of sealing of the electrolyte solution by using a synthetic resin provided with an elasticity for the sealing material, arranging this at a periphery of end portions of the substrates, and pinching this by the substrates so as to compress, as shown in Fig. 2 (patent document 6).

In detail, a photo electrode 104 is constructed by a transparent first electrode base material 101, a first conductive membrane 102 provided on one surface of the first electrode base material 101, and a porous semiconductor layer 103 formed on the first conductive membrane 102 by using a semiconductor material and made by adsorbing a sensitizing dye.

Further, a counter electrode 107 is constructed by a second electrode base material 105, and a second conductive membrane 106 provided on one surface of the second electrode base material 105.

An electrolyte layer 108 including a liquid or gel electrolyte is interposed between the photo electrode 104 and the counter electrode 107.

Further, a sealing material sealing the electrolyte layer 108 is provided between the photo electrode 104 and the counter electrode 107, and a gasket 109 made of a synthetic resin and provided with an elasticity is used as the sealing material. Further, in order to integrate these members, corner portions at four positions of the photo electrode 104 and the counter electrode 107 are fastened and retained by four bolts 111 and nuts 112.

In accordance with this method, since the sealing material can follow the swelling and contraction of the base materials on the basis of the provided elasticity, it is possible to lessen the risk that the adhered portion is peeled and the substrate is broken, and to secure a long-term reliability of the sealing.

However, since a shape of the proposed sealing material is formed like an O-ring shape, a space between the substrates becomes large, and it is very hard to obtain a space thickness of 100 µm or less which is a general space thickness in the adhesion method.

Accordingly, a high conversion efficiency can not be expected in spite of an excellent sealing performance.

Further, in order to compress the elastic material having the O-ring shape for sealing, a great seal surface pressure is generally necessary.

Accordingly, in the case that the cell becomes large in its area, the substrate may be deflected by great compression force, or there is a risk that it is broken in some cases.

Further, in the case of fastening and retaining by the bolts 111 and the nuts 112, there is caused a problem that a gap between the photo electrode 104 and the counter electrode 107 is not constant.

Furthermore, there has been proposed a method of attaching a gasket made of an elastic material to one of a photo electrode and a counter electrode by using an adhesive agent.

However, the adhesive agent is deteriorated by the electrolyte solution, the solar light or the like, and it is hard to obtain the sealed state having the reliability for a long term.

Further, since the number of man hours for manufacturing is increased, there is caused a problem that a manufacturing cost is increased.
Patent Document 1: Japanese Unexamined Patent Publication No. 2002-299665
Patent Document 2: Japanese Unexamined Patent Publication No. 2002-368236
Patent Document 3: Japanese Unexamined Patent Publication No. 2003-188394
Patent Document 4: Japanese Unexamined Patent Publication No. 2004-172048
Patent Document 5: Japanese Unexamined Patent Publication No. 2007-335197
Patent Document 6: Japanese Unexamined Patent Publication No. 2006-202681
Patent Document 7: Japanese Unexamined Patent Publication No. 2007-073401

### SUMMARY OF THE INVENTION

### Problem to be Solved by the Invention

An object of the present invention is to obtain a sealed state in which a gasket can be fixed to one of a photo electrode and a counter electrode, a sealing means is not deteriorated by an electrolyte solution, a solar light or the like, and a long-term reliability is secured.

### Means for Solving the Problem

In order to achieve the object mentioned above, in accordance with the present invention, there is provided a dye-sensitized solar cell comprising:
a photo electrode comprising a transparent first electrode base material, a first conductive membrane provided on one surface of the first electrode base material, and a porous semiconductor layer formed on the first conductive membrane by using a semiconductor material and made by adsorbing a sensitizing dye;
a counter electrode comprising a second electrode base material, and a second conductive membrane provided on one surface of the second electrode base material;
an electrolyte layer arranged between the photo electrode and the counter electrode; and
a sealing means sealing the electrolyte layer between the photo electrode and the counter electrode,
wherein the sealing means is constructed by a gasket which is sandwiched between the photo electrode and the counter electrode, is fixed by a retaining means formed in any one of the photo electrode and the counter electrode, seals the electrolyte layer, is made of an elastic material and formed in a lip shape.

### Effect of the Invention

The present invention achieves effects as described below.

In accordance with the dye-sensitized solar cell on the basis of the invention described in claim 1, since it is possible to fix the sealing means to one of the photo electrode and the counter electrode without using any adhesive agent, the sealing means is not deteriorated by an electrolyte solution, the solar light or the like, and it is possible to obtain the sealed state having reliability for a long term.

Further, in accordance with the dye-sensitized solar cell on the basis of the invention described in claim 2, it is possible to securely fix the sealing means to one of the photo electrode and the counter electrode.

Further, in accordance with the dye-sensitized solar cell on the basis of the invention described in claim 3, it is possible to easily fix the sealing means to one of the photo electrode and the counter electrode.

Further, in accordance with the dye-sensitized solar cell on the basis of the invention described in claim 4, it is possible to hold a gap between the photo electrode 4 and the counter electrode 7 precisely and fixedly.

Further, in accordance with the dye-sensitized solar cell on the basis of the invention described in claim 5, since it is possible to integrate the gasket and the substrate without using any special adhesive agent, it is possible to enhance an electrolyte solution resistance.

Further, in accordance with the dye-sensitized solar cell on the basis of the invention described in claim 6, it is possible to achieve a good sealing function of the gasket.

Further, in accordance with the dye-sensitized solar cell on the basis of the invention described in claim 7, a low temperature characteristic and a compressive permanent strain resistance are good.

### BRIEF EXPLANATION OF DRAWINGS

Fig. 1 is a cross sectional view of a dye-sensitized solar cell showing an embodiment in accordance with the present invention;
Fig. 2 is a cross sectional view of the dye-sensitized solar cell showing another embodiment in accordance with the present invention; and

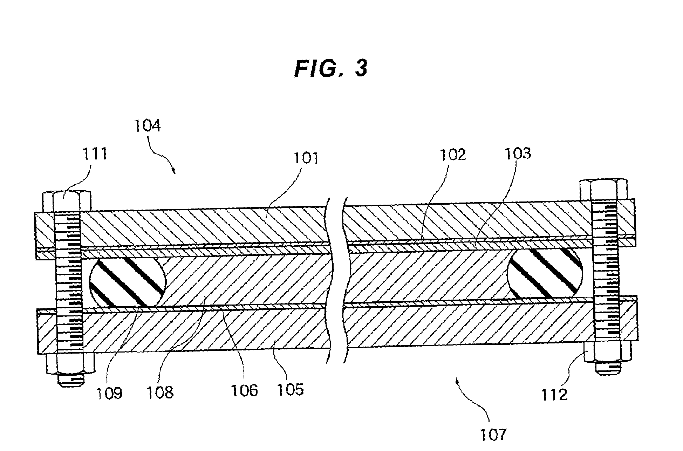

Fig. 3 is a cross sectional view of a dye-sensitized solar cell in accordance with a conventional art.

### Description of Reference Numerals

- 1: first electrode base material
- 2: first conductive membrane
- 3: semiconductor layer
- 4: photo electrode
- 5: second electrode base material
- 6: second conductive membrane
- 7: counter electrode
- 8: electrolyte layer
- 9: gasket
- 11: groove portion
- 12: spacer film
- 13: retaining means
- 131: through hole
- 132: dovetail groove

### DETAILED DESCRIPTION OF PREFERRED EMBODIMENTS

A description will be given below of preferred embodiments for carrying out the present invention.

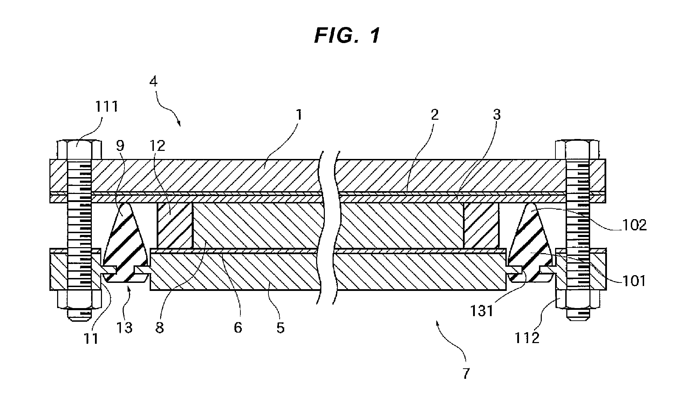

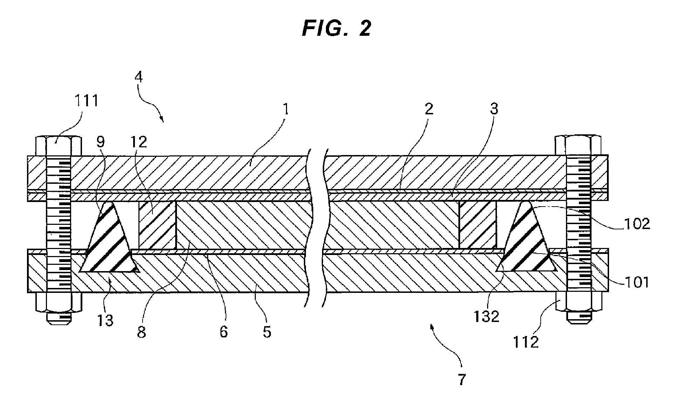

The description of the preferred embodiments for carrying out the invention will be given on the basis of Figs. 1 and 2.
Fig. 1 is a cross sectional view of a dye-sensitized solar cell showing an embodiment in accordance with the present invention.
Fig. 2 is a cross sectional view of the dye-sensitized solar cell showing another embodiment in accordance with the present invention.

In detail, a photo electrode 4 is constructed by a transparent first electrode base material 1, a first conductive membrane 2 provided on one surface of the first electrode base material 1, and a porous semiconductor layer 3 formed on the first conductive membrane 2 by using a semiconductor material and made by adsorbing a sensitizing dye.

Further, a counter electrode 7 is constructed by a second electrode base material 5, and a second conductive membrane 6 provided on one surface of the second electrode base material 5.

An electrolyte layer 8 including a liquid or gel electrolyte is interposed between the photo electrode 4 and the counter electrode 7.

Further, a lip-shaped gasket 9 made of an elastic material is arranged as a sealing means, the gasket 9 being sandwiched between the photo electrode 4 and the counter electrode 7 and sealing the electrolyte layer 8.

A material used for this gasket 9 is a synthetic rubber or a synthetic resin having elasticity and electrolyte solution resistance, among which an olefin rubber or a fluorocarbon rubber is preferably used, and a liquid state ethylene propylene terpolymer (EPDM) is particularly preferable.

Further, a stabilizer, a tackifier, a mold release agent, a flame-retardant, a short fiber and the like are appropriately added into these kinds of materials.

These kinds of materials having a hardness (a durometer A) in a range between 30 and 50 are used.

If the hardness is 50 or more, a low temperature characteristic, an elongation property and a compressive permanent strain resistance are worsen, and if the hardness is 30 or less, a sufficient seal surface pressure can not be obtained. In both cases, a good sealing function can not be achieved.

Further, the gasket 9 is provided with a lip 102 extending from a base portion 101 toward a top end.

Further, the base portion 101 reaches a back surface side through a through hole 131 provided in a bottom portion of a groove portion 11 provided in the counter electrode 7 side and.

Accordingly, the gasket 9 is firmly fixed to the counter electrode 7 side without using any adhesive agent.

The groove portion 11 is designed such that a depth of the groove portion 11 is shallower than a height of the gasket 9, and a cross sectional area of the gasket 9 is smaller than a cross sectional area of the groove portion 11.

Further, a shape of the lip 102 is formed in a triangle shape or a trapezoidal shape, and a top thereof comes into seal contact with the photo electrode 4.

Further, a spacer film 12 is arranged at an inner side of the gasket 9.

It is possible to precisely and fixedly hold a gap between the photo electrode 4 and the counter electrode 7 by this spacer film 12.

Performances demanded of the space film 12 are an insulating property, a resistance against an electrolyte solution and a goodness of a thickness working precision.

As a material satisfying these demanded performances, there are a resin film, and a polyethylene terephthalate, a polyethylene naphthalate and a polyimide are particularly preferable materials.

Further, in order to integrate these members, corner portions at four positions of the photo electrode 4 and the counter electrode 7 are fastened and retained by four bolts 111 and nuts 112.

Next, a description will be given of another embodiment in accordance with the present invention on the basis of Fig. 2.

A difference from the embodiment shown previously exists in a point that the invention in Fig. 1 utilizes the through hole 131 as the retaining means 13, however, the present embodiment utilizes a dovetail groove 132.

By employing the aspect mentioned above, it is possible to form a product using no adhesive agent, without changing an outer appearance of the dye-sensitized solar cell.

The material used for the first electrode base material 1 is not particularly limited as long as it is transparent, and a material which is transparent or has a high light transmitting performance, and has such a strength as to sandwich the sealing material, for example, a glass, a polyethylene terephthalate, a polyethylene naphthalate, a polycarbonate, a polyether sulphone and the like can be used. They may be used independently or a mixed material and a laminated material may be formed by using some of them so as to be applied.

Further, as for the second electrode base material 5, its material is not particularly limited as long as it can form a surface provided with such a smoothness as to be capable of forming the second conductive membrane 6, and has such a strength as to sandwich the sealing material, and an inorganic material, an organic material, a metal material and the like can be used without regard to the kind of the material.

Further, as for the electrolyte layer 8, any material can be used without being particularly limited, as long as it includes a liquid or gel electrolyte, however, a mixed solution obtained by resolving iodine and lithium iodide into acetonitrile, a liquid electrolyte obtained by adding lithium iodide, iodine and the like into a solvent such as methoxypropionitrile or the like, and a pseudo-solidified electrolyte such as a polymer gel electrolyte solution and the like are preferably used. Further, in order to lower a viscosity in the case of the liquid state, and smoothen diffusion of the ion, a room temperature molten salt, specifically 1,2-dimethyl-3-propyl imidazolium iodide is used.

Further, as for a semiconductor material used for forming a porous semiconductor layer forming the semiconductor layer 3, titanium oxide (TiO₂) is preferable, however, the material is not limited to it and SnO₂, ZnO, MgO, Al₂O₃ and the like can be used.

Further, as for the sensitizing dye forming the semiconductor layer 3, a ruthenium-bipyridine complex having a carboxyl radical as a ruthenium complex dye, a bipyridyl group compound, a phenanthroline, a quinoline and the like can be used.

As for a material used for forming the first conductive membrane 2, it can be formed by a tin-doped indium oxide (ITO) and a fluorine-doped tin oxide (FTO) having a high conductivity as well as being excellent in a transparency, a gold, a platinum and the like, and a combination of some of them in accordance with an appropriate method such as a vacuum evaporation method, a sputter evaporation method, an ion plating method or the like.

Further, as for the second conductive membrane 6, it can be formed by using platinum, carbon or the like as long as it generates an electric potential difference with respect to the first conductive membrane 2.

Further, it goes without saying that the present invention is not limited to the preferred embodiments for carrying out the invention as mentioned above, but can employ the other various structures without deviating from the scope of the present invention.

## Claims

1. A dye-sensitized solar cell comprising:
a photo electrode (4) comprising a transparent first electrode base material (1), a first conductive membrane (2) provided on one surface of said first electrode base material (1), and a porous semiconductor layer (3) formed on said first conductive membrane (2) by using a semiconductor material and made by adsorbing a sensitizing dye;
a counter electrode (7) comprising a second electrode base material (5), and a second conductive membrane (6) provided on one surface of said second electrode base material (5);
an electrolyte layer (8) arranged between said photo electrode (4) and said counter electrode (7); and
a sealing means sealing said electrolyte layer (8) between said photo electrode (4) and said counter electrode (7),
wherein said sealing means is constructed by a gasket (9) which is sandwiched between said photo electrode (4) and said counter electrode (7), is fixed by a retaining means (13) formed in any one of said photo electrode (4) and said counter electrode (7), seals said electrolyte layer (8), is made of an elastic material and formed in a lip shape.

2. The dye-sensitized solar cell as claimed in claim 1, wherein said retaining means (13) is constructed by a through hole (131) provided in any one of said photo electrode (4) and said counter electrode (7).

3. The dye-sensitized solar cell as claimed in claim 1, wherein said retaining means (13) is constructed by a dovetail groove (132) provided in any one of said photo electrode (4) and said counter electrode (7).

4. The dye-sensitized solar cell as claimed in any one of claims 1 to 3, wherein a spacer film (12) is arranged between said photo electrode (4) and said counter electrode (7).

5. The dye-sensitized solar cell as claimed in any one of claims 1 to 4, wherein said gasket (9) is firmly attached to any one of said photo electrode (4) and said counter electrode (7) by injection molding of a liquid rubber.

6. The dye-sensitized solar cell as claimed in any one of claims 1 to 5, wherein said gasket (9) is made of an ethylene propylene terpolymer (EPDM) material.

7. The dye-sensitized solar cell as claimed in any one of claims 1 to 5, wherein a material of said gasket (9) is an elastic material having a hardness in a range between 30 and 50 (durometer A).
